Europäisches Patentamt

European Patent Office

Office européen des brevets

(19)

(11) Numéro de publication: **0 214 032 B1**

# FASCICULE DE BREVET EUROPEEN

(12)

(45) Date de publication du fascicule du brevet:
25.04.90

(21) Numéro de dépôt: 86401787.6

(22) Date de dépôt: 08.08.86

(51) Int. Cl.⁴: **G01J 5/06,** H01L 31/02,
H01L 25/04, G01J 1/04,
F17C 3/08

(54) **Barrette de détecteurs infra-rouge comportant un écran froid à angle de vue constant.**

(30) Priorité: 13.08.85 FR 8512351

(43) Date de publication de la demande:
11.03.87 Bulletin 87/11

(45) Mention de la délivrance du brevet:
25.04.90 Bulletin 90/17

(84) Etats contractants désignés:
DE GB NL

(56) Documents cités:
EP-A- 0 125 016
GB-A- 2 115 143

PATENTS ABSTRACTS OF JAPAN,
vol. 4, no. 138 (P-29)[620], 27 septembre 1980; &
JP-A-55 89 723 (FUJITSU K.K.) 07-07-1980

(73) Titulaire: THOMSON-CSF, 51, Esplanade du Général de
Gaulle, F-92800 Puteaux(FR)

(72) Inventeur: Prost, Roger, THOMSON - CSF
SCPI 19, avenue de Messine, F-75008 Paris(FR)

(74) Mandataire: Mayeux, Michèle et al, THOMSON-CSF
SCPI, F-92045 PARIS LA DEFENSE CEDEX 67(FR)

## Description

La présente invention concerne une barrette de détecteurs infra-rouge comportant un écran froid à angle de vue constant.

Il est connu dans l'art antérieur de munir les barrettes de détecteurs infra-rouge d'un écran froid qui limite l'angle de vue des détecteurs et donc leur bruit propre, et accroît ainsi leur sensibilité (cf. par exemple EP-A 125 016).

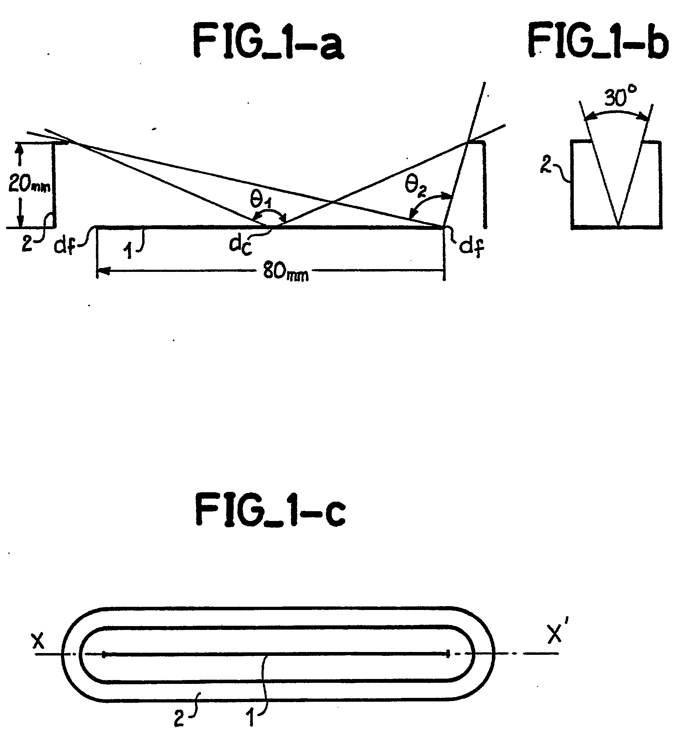

La figure 1a représente de façon schématique un mode de réalisation d'une barrette de détecteurs infra-rouge 1 munie d'un écran froid 2 selon l'art antérieur. La barrette et l'écran sont placés dans un cryostat qui n'est pas représenté. Les figures 1b et 1c représentent le dispositif de la figure 1a respectivement vu de côté et vu de dessus.

Perpendiculairement à l'axe XX' de la barrette, l'angle de vue des détecteurs est constant, et égal à 30° dans l'exemple choisi, comme cela est indiqué sur la figure 1b.

Par contre, il est clair en observant la figure 1a que, selon l'axe de la barrette, l'angle de vue des détecteurs varie selon la position des détecteurs sur la barrette. L'angle de vue $\theta_1$ pour le détecteur central $d_c$ est beaucoup plus important que l'angle de vue $\theta_2$ pour les détecteurs $d_f$ des extrémités de la barrette.

Dans l'exemple représenté sur les figures 1a, b, et c où la barrette de détecteurs fait 80 mm de long et où la face supérieure de l'écran froid se trouve à 20 mm de la barrette, l'angle solide vu par le détecteur central est de 0,95 stéradian alors que les détecteurs des extrémités de la barrette ont un angle de vue de 0,62 stéradian.

Le problème qui se pose dans les dispositifs de l'art antérieur, et que la présente invention cherche à résoudre, est celui de la grande différence entre les valeurs des angles de vue des détecteurs d'une même barrette.

Ce problème se pose d'autant plus que les barrettes sont de grandes dimensions, comme c'est le cas pour les applications spatiales par exemple.

Ainsi dans l'exemple des figures 1a, b et c où l'angle de vue selon l'axe de la barrette varie entre 0,95 et 0,62 stéradian, cela se traduit par un rapport de 1,55 entre les flux de photons.

Cela entraîne des variations de sensibilité importantes pour les détecteurs, ainsi que des difficultés pour la lecture des barrettes par multiplexeur. Lors d'une telle lecture on utilise un même dispositif à transfert de charge pour tous les détecteurs. Il est difficile de dimensionner de façon satisfaisante ce dispositif à transfert de charge et cela se traduit par une lecture de mauvaise qualité.

La présente invention propose une barrette de détecteurs infra-rouge comportant un écran froid à angle de vue constant. Le dispositif utilisé est simple, efficace et d'encombrement réduit.

La présente invention concerne une barrette de détecteurs infra-rouge, comportant un écran froid, du type assurant dans une direction perpendiculaire à l'axe de la barrette, un angle de vue constant pour tous les détecteurs, la barrette et l'écran étant placés dans un cryostat, caractérisée en ce que deux miroirs sont disposés aux extrémités de la barrette et placés dans la partie chaude du cryostat, ces miroirs étant tels que le détecteur placé au centre de la barrette ne voit, par réflexion dans les deux miroirs, que des surfaces froides, alors que les autres détecteurs voient, par réflexion dans les deux miroirs, des surfaces chaudes selon une proportion qui augmente au fur et à mesure qu'on s'éloigne du détecteur central de la barrette, de façon que tous les détecteurs de la barrette aient, selon l'axe de la barrette, un angle de vue sensiblement constant.

D'autres objets, caractéristiques et résultats de l'invention ressortiront de la description suivante donnée à titre d'exemple non limitatif et illustrée par les figures annexées qui représentent :
- les figures 1a, b et c, différentes vues d'un mode de réalisation d'une barrette de détecteurs infra-rouge munie d'un écran froid selon l'art antérieur ;
- les figures 2a et b, des vues d'un mode de réalisation d'une barrette de détecteurs infra-rouge comportant un écran froid à angle de vue constant selon l'invention.

Sur les différentes figures, les mêmes repères désignent les mêmes éléments, mais, pour des raisons de clarté, les cotes et proportions des divers éléments ne sont pas respectées.

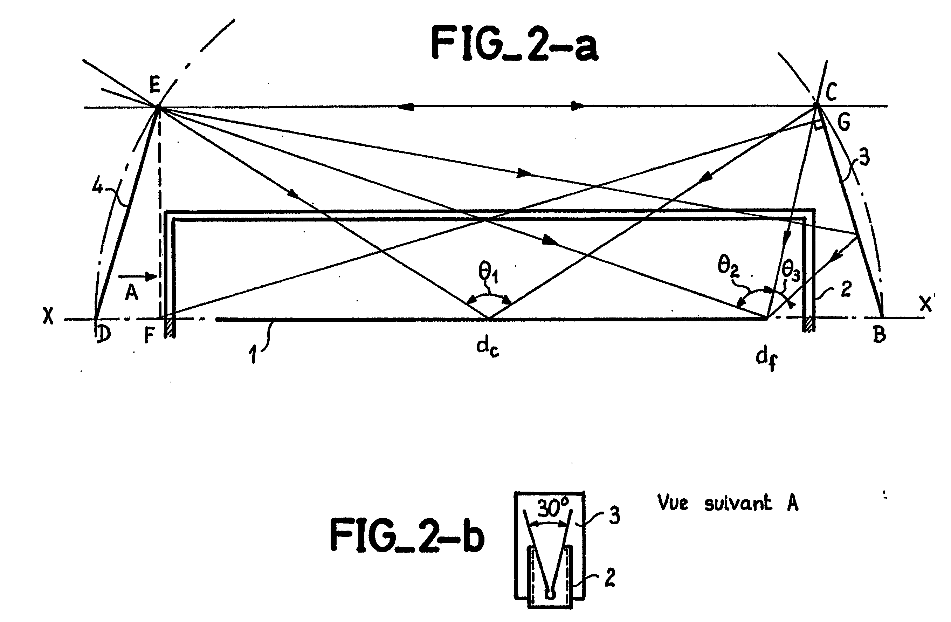

La figure 2a représente de façon schématique un mode de réalisation d'un dispositif selon l'invention.

Comme dans l'art antérieur ce dispositif comporte une barrette de détecteurs 1 et un écran froid 2 qui assure, dans une direction perpendiculaire à l'axe XX' de la barrette, un angle de vue constant pour tous les détecteurs.

La figure 2b est une vue du dispositif de la figure 2a selon la direction A indiquée sur la figure 2a. Sur cette figure 2b, on a indiqué l'angle de vue constant, de 30° par exemple, assuré par l'écran froid à tous les détecteurs de la barrette dans une direction perpendiculaire à l'axe XX' de la barrette.

Selon l'invention, on dispose aux extrémités de la barrette deux miroirs cylindriques 3 et 4 de traces respectives BC et DE dans le plan de la figure 2a, placés dans la partie chaude du cryostat contenant la barrette de détecteurs et l'écran froid.

Dans le mode de réalisation des figures 2a et b, on utilise deux miroirs cylindriques identiques, et positionnés de façon symétrique en rapport à la barrette.

On choisit la forme et les dimensions de ces miroirs, ainsi que leur position, pour que le détecteur placé au centre de la barrette ne voit, par réflexion dans ces deux miroirs, que des surfaces froides, alors que les autres détecteurs voient, par réflexion dans les deux miroirs, des surfaces chaudes, selon une proportion qui augmente au fur et à mesure qu'on s'éloigne du détecteur central de la barrette. Ainsi, selon l'axe XX', de la barrette, chaque détecteur a un angle de vue sensiblement constant et égal à celui du détecteur central.

Sur la figure 2a, on a représenté en trait fin le trajet de quelques rayons pour mettre en évidence le fait que le détecteur central $d_c$ ne peut voir, par réflexion dans les miroirs, que des surfaces froides, ce qui lui assure un angle de vue égal à $\theta_1$ selon l'axe XX'.

Cet angle de vue $\theta_1$ est obtenu à partir des deux rayons aboutissant au détecteur central $d_c$ et qui s'appuient sur les extrémités supérieures des miroirs 3 et 4. Le détecteur central $d_c$ reçoit donc des photons directement, sans qu'il y ait réflexion sur les miroirs.

On a aussi montré sur la figure 2a que le détecteur $d_f$ placé à l'extrémité droite de la barrette a un angle de vue égal à $\theta_2 + \theta_3$. L'angle de vue $\theta_2$ est obtenu à partir des deux rayons aboutissant à ce détecteur et qui s'appuient sur les extrémités supérieures des miroirs 3 et 4. L'angle de vue $\theta_3$ est un angle de vue supplémentaire pour le détecteur $d_f$ et dû à la réflexion sur le miroir 3 d'un rayon qui s'appuie sur l'extrémité supérieure du miroir 4. Selon l'invention, l'angle de vue $\theta_1$ est sensiblement égal à la somme des angles de vue $\theta_2$ et $\theta_3$.

Pour les détecteurs placés entre le détecteur central et l'un des détecteurs d'extrémité, l'angle de vue supplémentaire dû à la réflexion sur l'un des miroirs est inférieur à $\theta_3$ car leur angle de vue initial est supérieur à $\theta_2$.

Pour le détecteur central, les miroirs jouent le même rôle que l'écran froid dans les dispositifs de l'art antérieur en ce sens qu'ils ne servent qu'à limiter l'angle d'ouverture selon l'axe XX' sans que leurs propriétés de réflexion soient utilisées comme c'est le cas pour les autres détecteurs.

Pour les autres détecteurs, les miroirs permettent de recevoir un complément de flux de photons.

Dans le mode de réalisation des figures 2a et b, on utilise des miroirs cylindriques identiques 3 et 4. Les génératrices des cylindres sont parallèles pour le miroir 3 à BC et pour le miroir 4 à DE. La directrice est un cercle situé dans un plan perpendiculaire aux génératrices et dont le rayon égale FG, F étant la projection de l'extrémité E du miroir 4 sur le plan des détecteurs, et G étant la projection de F sur le miroir 3.

Diverses variantes de l'invention peuvent être envisagées.

Par exemple, en ce qui concerne la forme des miroirs utilisés. On peut utiliser des miroirs cylindriques avec un autre rayon de directrice ou avec une directrice elliptique ou parabolique. On peut aussi utiliser des miroirs sphériques, côniques, ellipsoïdaux, dièdres plans ...

On peut aussi ne pas utiliser deux miroirs identiques qui ne seront pas positionnés de façon symétrique par rapport à la barrette.

Dans toutes ces variantes, on choisit toujours la forme, la dimension des miroirs ainsi que leur position, pour que le détecteur placé au centre de la barrette ne voit par réflexion dans les deux miroirs que des surfaces froides, alors que les autres détecteurs voient par réflexion dans les deux miroirs des surfaces chaudes, selon une proportion qui augmente au fur et à mesure qu'on s'éloigne du détecteur central de la barrette, de façon à ce que selon l'axe XX' de la barrette chaque détecteur ait un angle de vue sensiblement constant.

## Revendications

1. Barrette de détecteurs infra-rouge comportant un écran froid, du type assurant dans une direction perpendiculaire à l'axe de la barrette (XX') un angle de vue constant pour tous les détecteurs, la barrette (1) et l'écran (2) étant placés dans un cryostat, caractérisée en ce que deux miroirs (3, 4) sont disposés aux extrémités de la barrette et placés dans la partie chaude du cryostat, ces miroirs étant tels que le détecteur ($d_c$) placé au centre de la barrette ne voit par réflexion dans les deux miroirs que des surfaces froides alors que les autres détecteurs voient par réflexion dans les deux miroirs des surfaces chaudes selon une proportion qui augmente au fur et à mesure qu'on s'éloigne du détecteur central de la barrette, de façon à ce que tous les détecteurs de la barrette aient, selon l'axe (XX') de la barrette, un angle de vue sensiblement constant.

2. Barrette selon la revendication 1, caractérisée en ce que les deux miroirs (3, 4) sont identiques et positionnés de façon symétrique par rapport à la barrette (1).

3. Barrette selon la revendication 1, caractérisée en ce que les deux miroirs (3, 4) sont différents.

4. Barrette selon l'une des revendications 1 à 3, caractérisée en ce que l'un au moins des miroirs (3, 4) est cylindrique ou sphérique ou cônique ou ellipsoïdal ou dièdre plan.

## Claims

1. A strip array of infrared detectors comprising a cold screen, of the type ensuring, in a direction perpendicular to the axis of the strip (XX'), a constant viewing angle for all the detectors, the strip array (1) and the screen (2) being placed in a cryostat, characterized in that two mirrors (3 and 4) are disposed at the ends of the strip array and placed in the warm part of the cryostat, the mirrors being such that by reflection in the two mirrors, the detector ($d_c$) placed at the center of the strip array is only able to receive radiation from the cold surfaces whereas the other detectors, by way of reflection in the two mirrors, receive radiation from warm surfaces in accordance with a proportion which increases with an increases in the distance from the central detector of the strip array in such a manner that all the detectors of the strip array have, in accordance with the axis (XX') of the strip array, a substantially constant angle of reception.

2. The strip array as claimed in claim 1, characterized in that the two mirrors (3 and 4) are identical and are symmetrically positioned in relation to the strip array (1).

3. The strip array as claimed in claim 1, characterized in that the two mirrors (3 and 4) are different.

4. The strip array as claimed in any one of the preceding claims 1 through 3, characterized in that at least one of the mirrors (3 and 4) is cylindrical, spherical, conical or ellipsoidal or in the form of a plane dihedron.

**Patentansprüche**

1. Infrarotdetektorzeile mit einem kalten Schirm, vom Typ, der in einer zur Achse (XX') der Zeile senkrechten Richtung einen für alle Detektoren konstanten Blickwinkel gewährleistet, wobei die Zeile (1) sowie der Schirm (2) in einem Kryostat angeordnet sind, dadurch gekennzeichnet, daß zwei Spiegel (3, 4) an den Enden der Zeile und in dem warmen Teil des Kryostats angeordnet sind, wobei diese Spiegel von solcher Art sind, daß der im Zentrum der Zeile angeordnete Detektor ($d_c$) durch Spiegelung in den beiden Spiegeln lediglich kalte Oberflächen sieht, während die anderen Detektoren durch Spiegelung in den beiden Spiegeln warme Oberflächen in einer Proportion sehen, die im gleichen Maße zunimmt, wie man sich von dem zentralen Detektor der Zeile entfernt, so daß alle Detektoren der Zeile gemäß der Achse (XX') der Zeile einen im wesentlichen konstanten Blickwinkel haben.

2. Zeile nach Anspruch 1, dadurch gekennzeichnet, daß die beiden Spiegel (3, 4) miteinander identisch und in bezug auf die Zeile (1) symmetrisch angeordnet sind.

3. Zeile nach Anspruch 1, dadurch gekennzeichnet, daß die beiden Spiegel (3, 4) unterschiedlich sind.

4. Zeile nach einem der Ansprüche 1 bis 3, dadurch gekennzeichnet, daß wenigstens einer der Spiegel (3, 4) zylindrisch, sphärisch, konisch, ellipsoidisch oder ein ebenes Zweiflach ist.

# FIG_1-a

# FIG_1-b

# FIG_1-c

FIG_2-a

FIG_2-b

Vue suivant A